Europäisches Patentamt

European Patent Office

Office européen des brevets

(19)

(11) Publication number: **0 063 201**
**A1**

(12) **EUROPEAN PATENT APPLICATION**

(21) Application number: **81830164.0**

(22) Date of filing: **17.09.81**

(51) Int. Cl.³: **C 21 C 5/56**
**C 22 B 1/00**

(30) Priority: **16.04.81 IT 8336181**

(43) Date of publication of application:
**27.10.82 Bulletin 82/43**

(84) Designated Contracting States:
**AT BE CH DE FR GB LI LU NL SE**

(71) Applicant: **DANECO-DANIELI ECOLOGIA Spa**
**Via Beltrame, 28**
**I-33042 Buttrio (UD)(IT)**

(72) Inventor: **Babos, Luciano**
**Via Doberdò, 26**
**I-34100 Trieste(IT)**

(72) Inventor: **Lorenzutti, Franco**
**Via Manzoni, 8**
**I-33052 Cervignano Del Friuli(IT)**

(72) Inventor: **Martegani, Antonio Dario**
**Via Ovidio, 4/3**
**I-34100 Trieste(IT)**

(74) Representative: **Petraz, Gilberto**
**G.L.P. S.a.s. di Gilberto Petraz P.le Cavedalis 6/2**
**I-33100 Udine(IT)**

(54) **Improvements to skips for charging scrap, and skips for charging scrap thus improved.**

(57) Skips (10) for charging scrap, such as those used in any desired system for pre-heating the scrap, whereby said system can envisage aspiration means cooperating with the skips (10) and whereby a plurality of holes (13) oriented as desired is comprised in at least the perimeter walls (14) of the skips (10), the inventive thought consisting in the cooling of the walls (14) of the skips (10).

fig.1

EP 0 063 201 A1

Description of the invention entitled:

"IMPROVEMENTS TO SKIPS FOR CHARGING SCRAP, AND SKIPS FOR CHARGING SCRAP THUS IMPROVED"

in the name of DANECO-DANIELI ECOLOGIA SpA at Buttrio

submitted on                         under No.

---

This invention concerns improvements to skips for charging scrap and also skips for charging scrap which adopt said improvements.

To be more exact, the improvements concern the possibility of cooling the skips for charging scrap with a layer of air during the phase when the scrap is pre-heated with any desired system.

It is known that, in view of the need to save energy in steel mills, the technique of pre-heating the scrap is being developed.

Said pre-heating is carried out either by means of burners using liquid or gaseous fuel and employing air or oxygen as the supporter of combustion or by means of the employment of the heat dispersed by billets during their cooling phase or by means of the recovery of fumes generated in the electric furnace and withdrawn from the fourth hole.

So as to be able to use these techniques, one of the problems to be overcome consists of the need to employ skips for the scrap, which (whether loose or compressed) may be of

Gilberto Petraz

a special kind.

The problem is caused by the need to prevent deformation of the skips taking place owing to the temperature which may be reached by said skips and to resist or lessen the effects of the high temperatures reached by the scrap.

The usual techniques have recourse to special skips of various kinds. Thus skips exist which have an inner refractory lining, or which have their walls cooled with water circulating in an appropriate circumferential jacket, or which are suitable for pre-heating the scrap at a low temperature and have their walls cooled with air circulating in an appropriate circumferential jacket and blown from the outside with suitable nozzles.

This invention concerns improvements which enable the walls of the skips to be cooled with marginal modifications as compared to the normal charging skips.

Therefore, the skips which adopt said improvements are not made of a material resistant to high temperatures nor do they need jackets for the circulation of a cooling liquid not an inner refractory lining.

According to the invention the circumferential walls of the skips are provided with a plurality of holes like slots or clefts oriented as wished.

In this way the gases aspirated from above the skip draw with them, near the wall of the skip, the substantially cooler surrounding air.

The invention is therefore embodied in improvements to skips for charging scrap which are used in any desired system for pre-heating the scrap, whereby said system can provide for suction means cooperating with the skip, said improvements being characterized by the fact that at least part of the perimeter walls of the skips includes a plurality of holes oriented as wished.

Gilberto Petraz

This invention also concerns skips for charging scrap which adopt said improvements.

The attached table shows a preferential but not restrictive lay-out of the invention, wherein: -

Fig. I    shows a side view of a skip according to the invention;

Figs.2    show some possible kinds of holes;

Figs.3    show some possible orientations of the holes.

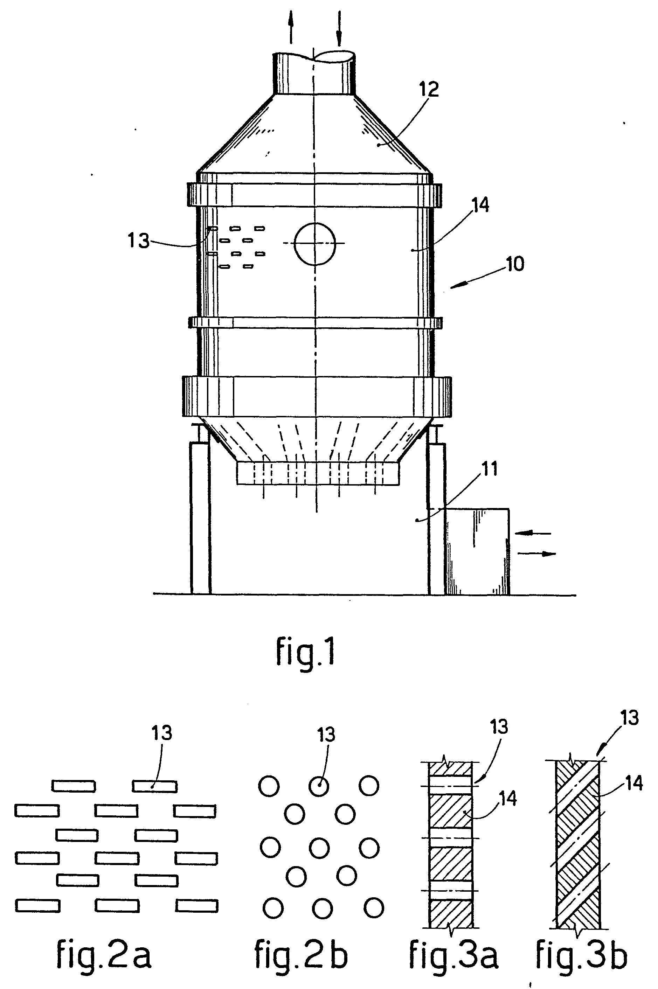

In any pre-heating system, such as the one shown in Fig.I for instance, the products of combustion or the fumes aspirated from the electric arc furnace or the hot gases rising from the billets cooling off pass through the scrap held in the skip IO from below upwards, moving from a lower chamber II, or other like element, up to an upper collection hood I2.

In some cases the flow moves from above downwards and follows a path opposite to the aforesaid path.

The hot gases are compelled to follow this path by an aspirator or fan (not shown here) which arranges for them to be aspirated, whatever the path may be which they are following.

According to the invention the fan aspirating the hot fumes and/or gases provides for the cooling of the walls of the skip.

In fact, at least the wall I4 of the skip IO is provided with holes I3 of any desired shape and size. Said holes I3 can be round, oval, rectangular, square, etc. and they can be laid out in such a way as to be in concordance or contrast with, or at right angles to, the flow of the gases or to be oriented in various directions.

Fresh air is aspirated through said holes I3 from the outside.

The air which comes into the skip IO in this way is not

Gilberto Petraz

mixed with the fumes but tends to adhere to the inner wall. of the skip and forms a layer which makes it possible to obtain a twofold effect of cooling the skip and insulating it from high-temperature fumes by hindering direct contact between the fumes and the wall of the skip.

The present author has found out by experiments that, with this system suitably dimensioned and even with a pre-heating temeprature of 500-600°C of the scrap, the temperature of the walls of the skip is kept at values below 200-250°C without any other device being needed.

The improvements proposed, therefore, enable at least the following advantages to be obtained:

- pre-heating of scrap with normal skips improved according to the invention;

- no complication nor need for modification of the system of aspiration of fumes or of cooling the skip.

We have described some variants here, but others are possible. Thus the proportions and sizes can be varied and it is possible, for instance, to add parts such as shields or progressive inlet and/or outlet slits; it is possible to envisage holes 13 having inner ribs so as to enhance the turbulence of the air, etc. These and other variants are all possible for a technician in this field.

Gilberto Petraz

**0063201**

## C L A I M S

I. Improvements to skips for charging scrap, being skips such as those used in any desired system for pre-heating the scrap, whereby said system can envisage aspiration means cooperating with the skip (IO), said improvements being characterized by the fact that a plurality of holes (I3) oriented as desired is comprised at least in the perimeter walls (I4) of the skips (IO).

2. Improvements to skips for charging scrap, as in Claim I, characterized by the fact that the holes (I3) have any desired crosswise and lengthwise sections.

3. Improvements to skips for charging scrap, as in Claims I and 2, characterized by the fact that the holes (I3) are all oriented in the same direction as the flow of the hot gases.

4. Improvements to skips for charging scrap, as in Claims I and 2, characterized by the fact that the holes (I3) are oriented in various directions in respect of the flow of hot gases.

5. Skips for charging scrap, being such as those used in any desired system for pre-heating the scrap, whereby said system can envisage aspiration means cooperating with the skip (IO), said skips being characterized by adopting one or more of the improvements of the Claims hereinbefore.

6. Improvements to skips for charging scrap, and skips for charging scrap thus improved, as described and shown and for the purposes granted.

Gilberto Pedraz

1/1

fig.1

fig.2a     fig.2b     fig.3a     fig.3b

Gilberto Petraz

## European Patent Office

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | GB-A-2 049 895 (NIKKO) <br> * abstract and claims * | 1-4 | C 21 C   5/56 <br> C 22 B   1/00 |
| Y | FR-A-1 564 023 (INGENIOR GUNNAR SCHJELDERUP) <br> * the whole document * | 1 | |
| Y | DE-B-2 302 012 (MAERZ) <br> * claims 2,6; column 3, lines 1-13 * | 1 | |
| Y | DE-A-2 118 069 (WAAGNER-BIRO) <br><br> * figure 2; page 6, paragraph 1 * | 1 | |
| A | DE-A-1 804 098 (FRIED. KRUPP) | | |

TECHNICAL FIELDS SEARCHED (Int. Cl. 3)

C 21 C
C 22 B
F 27 D

The present search report has been drawn up for all claims

| Place of search <br> THE HAGUE | Date of completion of the search <br> 25-06-1982 | Examiner <br> OBERWALLENEY R.P.L.I |
|---|---|---|